# EUROPEAN PATENT APPLICATION

(11) **EP 4 198 655 A1**
(43) Date of publication of application: **21.06.2023**
(21) Application number: 21215300.1
(22) Date of filing: 16.12.2021
(51) Int. Cl.: G05B 13/04, G05B 17/02

(54) **ESTABLISHING OR IMPROVING A SIMULATION MODEL OF AN ELECTROLYZER PLANT**

(71) Applicant: ABB SCHWEIZ AG, 5400 Baden (CH)
(72) Inventor: GUTERMUTH, Georg, 69115 Heidelberg (DE); BISKOPING, Matthias, 69493 Hirschberg (DE); LENDERS, Felix, 64293 Darmstadt (DE); PRIMAS, Bernhard, 68165 Mannheim (DE); KOENIG, Kai, 69190 Walldorf (DE); KALPESH, Bhalodi, 64673 Zwingenberg (DE)
(74) Representative: Maiwald GmbH

(57) **Abstract**

A method (100) for establishing and/or improving a simulation model (2) of an electrolyzer plant (1) comprising at least one electrolyzer, wherein the simulation model (2) is configured to map one or more variables (3) that characterize an operating state (1a) of the electrolyzer plant (1) to one or more performance indicators (4) of the electrolyzer plant (1), the method comprising the steps of:
• predicting (110), using the simulation model (2), for a given operating state (1a) of the electrolyzer plant (1), one or more prediction values (5#) of at least one quantity (5);
• obtaining (120) one or more measurement values (5*) of the same at least one quantity (5) that relate to the same given operating state (1a) of the electrolyzer plant (1);
• determining (130) at least one deviation (Δ) of the one or more prediction values (5#) from the respective measurement values (5*);
• determining (140), from the deviation (Δ) and the simulation model (2), a contribution and/or an adjustment (2a) to the simulation model (2); and
• applying (150) the contribution, and/or the adjustment (2a), to the simulation model (2).

## Description

### FIELD OF THE INVENTION

The invention relates to the field of simulating the behavior of an electrolyzer plant for the purpose of running the plant in an optimal manner and detecting anomalies.

### BACKGROUND

A large water electrolyzer consists of multiple modules (AC filter, transformer, rectifier, DC filter, one or several stacks, drying/separation tanks, module automation, (possibly) cooling) and plant level equipment (compression & storage, water treatment, buffer tanks, H2 drying & purification, transformer, plant level control & optimization).

When setting up a model of the plant behavior for the purpose of running the plant in an optimal manner, it cannot be deduced from first level principles for several reasons:
1) The amount of needed information would be too large
2) Some of the effects are not completely understood
3) Some of the required data would not be available from the suppliers of the different components.

Thus, the solution is to get behavioral information on the components from the suppliers, typically based on measurements. Examples include:
- typical polarization curves of the electrolyzer stack (U vs. I diagram);
- efficiency values for different operation points of the stack (e.g. different temperatures, different part-loads or beginning & end of life);
- an efficiency curve of the electrical system; and
- standby consumption.

From these values, parameters are calculated to be used in a simplified, but sufficiently accurate model of the total system. This is somewhat akin to modelling the Earth as a solid sphere, or even as a point mass, for the purpose of making computations more tractable. Examples include:
- system efficiency (P, T, p); and
- stack efficiency degradation (*Ṗ*, T, cycles).

### OBJECTIVE OF THE INVENTION

It is an objective of the present invention to improve the accuracy of simulation models, so that better conclusions can be drawn from these models for operating the electrolyzer plant.

This objective is achieved by the method according to the independent claim. Further advantageous embodiments are detailed in the dependent claims.

### DISCLOSURE OF THE INVENTION

The invention provides a method for establishing and/or improving a simulation model of an electrolyzer plant. The electrolyzer plant comprises at least one electrolyzer. The simulation model is configured to map one or more variables that characterize an operating state of the electrolyzer plant to one or more performance indicators of the electrolyzer plant. Herein, "establishing and/or improving" is not to be construed limiting in the sense that the method needs to be able to produce the simulation model from scratch. Rather, this phrase means that a contribution produced by the method, e.g., in the form of determined and/or adjusted model parameters, may be applied to improve an already existing model, but also when the model is being first created.

In particular, the variables may comprise quantities that may be actively set or at least measured. Examples include:
- an input voltage to the electrolyzer plant or any part thereof (such as an electrolyzer stack or electrolyzer cell);
- a current flowing through the electrolyzer plant or any part thereof;
- a power input to the electrolyzer plant or any part thereof, or a rate of change of such power input;
- a temperature in the electrolyzer plant or any part thereof;
- an intake water pressure;
- a number of power cycles between higher power and lower power that an electrolyzer stack or electrolyzer cell has completed; and
- set-points for any low-level controllers in the electrolyzer plant that act upon the plant or any part thereof in order to keep one or more quantities at or near the set-point.

In particular, the performance indicator may comprise any quantity that is measurable, but whose knowledge ahead of time is desirable for the operation of the electrolyzer plant. Examples include:
- a production quantity of hydrogen;
- an energy efficiency of the electrolyzer plant or any part thereof;
- an amount of waste heat generated by the electrolyzer plant or any part thereof; and
- a degradation state of at least one electrolyzer cell or stack of the electrolyzer plant.

For example, if the performance indicator comprises some state indicator, obtaining a better prediction of this state indicator ahead of time allows to react to an abnormal or otherwise undesirable state indicated by this state indicator earlier, and thus to remedy the abnormal or undesirable state more swiftly.

In the course of the method, for a given operating state of the electrolyzer plant, one or more prediction values of at least one quantity are predicted. In particular, this predicted quantity may comprise the performance indicator, and/or at least one physical quantity that the simulation model uses for the computation of the performance indicator from the variables. For example, if the simulation model first computes a temperature and then goes on to compute a production quantity of hydrogen based on this temperature, a contribution, and/or an adjustment, of the simulation model may also be targeted at improving an accuracy with which the model predicts the temperature. This will then also improve the accuracy of the production quantity of hydrogen that is computed based at least in part on this temperature.

One or more measurement values of the same at least one predicted quantity is obtained. These one or more measurement values relate to the same given operating state of the electrolyzer plant.

At least one deviation of the one or more prediction values from the respective measurement values is determined. For example, when prediction values on the one hand and measurement values on the one hand for the same quantity are plotted over one or more variables, a deviation between the curves may be computed as a sum of squared differences between the values of the curves for discrete values of the one or more variables, or as an integral of the area between the curves.

From this deviation and the simulation model, a contribution and/or an adjustment to the simulation model is determined. For example, if the behavior of the simulation model is characterized by a set of parameters, then it may be determined which parameters are primarily responsible for the deviation. These parameters may then be amended accordingly. The contribution, and/or the adjustment, is applied to the simulation model. The determining of a contribution and/or adjustment may optionally be made dependent on the deviation being above a certain threshold. That is, an action on the simulation model may be taken only if the deviation is significant enough.

In this manner, the accuracy with which the simulation model predicts the actual behavior of the electrolyzer plant may be improved. The inventors have found that when initially setting up a model, there are several sources for inaccuracies.

For example, typical plant parameters on which the behavioral information obtained from a component supplier is based may not perfectly match the actual parameters with which the plant was commissioned. For example, the behavioral information may have been determined by the component supplier given intake water with a certain temperature, and at the site of the electrolyzer plant, the temperature of the intake water may be very different.

Also, component manufacturers frequently determine behavioral information based on standard curves of the product series. But this standard curve may be some sort of average around which the behaviors of the individual pieces of hardware are scattered. Behavioral information determined by the component manufacturer may not always include all needed dependencies. For example, an efficiency of an electrolyzer cell may be only given as a function of the input power, but not as a function of the temperature or the water pressure. Likewise, some effects may have been neglected when determining behavioral information. For example, the efficiency may have been determined only for the electrolyzer stack itself, but not for the whole plant including all auxiliary equipment (called Balance of Plant, BoP).

Also, some parameters on which the simulation model is based may change during operation of the plant. For example, the simulation model may presume that the temperature in the electrolyzer plant is constant, but in a particularly hot summer, the capacity of the air conditioning system may be saturated, and the temperature may rise.

Finally, parameters describing degradation, such as "0.1 % of efficiency loss for every 1000 hours of operation", are quite frequently averages over typical values and do not reflect the reality of each individual piece of equipment. This is somewhat akin to the lifetime specification of lightbulbs, where a lifetime of 1000 hours means that after 1000 hours, 50 % of the lightbulbs can be expected to have failed, and the other 50 % of the lightbulbs can be expected to be still working.

All of these uncertainties lead to a simulation model that is not reflecting reality and thus might suggest set-points for low-level controllers, or other operating parameters, that are not optimal or even wrong in the operating situation of the electrolyzer plant. By tuning the simulation model using actual measurement values, or even making contributions to the model based on these actual measurement values when creating the simulation model in the first place, prediction errors resulting from said inaccuracies can be minimized. The predictions obtained from the simulation model are then a better basis for determining optimal set-points and other operating parameters.

In a particularly advantageous embodiment, the given operating state and the measurement values are acquired during normal operation of the electrolyzer plant. That is, data that accrue anyway during this normal operation may be re-used in order to refine the simulation model.

Alternatively or in combination to this, in another particularly advantageous embodiment, the electrolyzer plant is steered into a given operating state that is not part of the normal operation of the electrolyzer plant, and the response of one or more measurement values to this steering is determined. In some of these special operating states, certain quantities may be determined easier, and/or with a better accuracy, than during normal operation of the electrolyzer plant.

For example, voltage and/or current fluctuations may be introduced into at least one electrolyzer cell of the electrolyzer plant. The response of the current through the at least one electrolyzer cell, and/or of the voltage over the at least one electrolyzer cell, to these voltage and/or current fluctuations may be measured. For example, a current response to voltage fluctuations, and/or a voltage response to current fluctuations, may be measured. This may be accomplished with the existing power electronics of the electrolyzer plant. In this manner, electrochemical impedance spectroscopy, as it is known from fuel cell testing, may be performed on the electrolyzer plant or any part thereof.

As another option, only one of multiple variables that characterize the operating state may be varied, and the response of the at least one quantity to this variation may be measured. In this manner, effects may be studied in isolation, while other effects are ruled out. Thus, there is no further inaccuracy from having to disentangle different effects from one another.

In particular, the temperature of at least one electrolyzer cell or stack of the electrolyzer plant is chosen as the variable to be varied. The temperature is one of the parameters that may vary the most between creation of the original model on the one hand and production operation of the electrolyzer plant on the other hand.

In a particularly advantageous embodiment, the contribution, and/or the adjustment, to the simulation model comprises one or more of:
- a change to parameters in a parametrized function of the variables;
- a change to the set of variables;
- a change of a function of the variables to a function of a different degree and/or type, and/or to a different function;
- a change to a level of complexity of the simulation model; and
- a change to a set of physical effects that are considered or neglected by the simulation model.

For example, the simulation model may compute the predicted quantity as a polynomial of a given degree in the one or more variables, such as a linear or multilinear function of the one or more variables. The coefficients of this polynomial may then be adapted depending on the deviation. But the degree of the polynomial may also, for example, be increased, so that a previously linear function becomes a quadratic function. The inverse problem of obtaining the contribution and/or adjustment may be solved using any suitable known mathematical method.

It is also generally possible to change the level of complexity of the simulation model depending on the determined deviation. For example, the simulation model may initially start out as a relatively simple model, and if it turns out that this is not accurate enough, it may be expanded to a more complex model that is computationally more expensive. In this manner, the higher computational expense is only used where it is really needed, and not "wasted" on clear-cut situations that could be handled just as well by the simple model.

For example, the determining of the contribution, and/or the adjustment, may comprise fitting at least one function of the variables, and/or of a computation result derived from the variables, to a plurality of measurement values. The contribution, and/or the adjustment, may then be optimized such that a best agreement is reached between the fitted function and the measurement values, according to any suitable criterion such as a least-squares error.

In a further particularly advantageous embodiment, during the fitting, the measurement values are weighted according to one or more of:
- the frequency with which they occur;
- their age; and
- an estimate of their accuracy.

For example, if the measurement values are acquired during normal operation of the electrolyzer plant, and the electrolyzer plant is operated at a particular operating point (such as at a certain power level) for most of the time, most acquired measurement values will be concentrated around that operating point. That is, the frequency of measurement values will be highest there. Two conclusions can be drawn from this. First, from a statistical point of view, the true value that the model should match can be determined very accurately from so many acquired measurement values that relate to the primary operating point of the electrolyzer plant. Second, if the electrolyzer is operated at the primary operating point most of the time, then having a good agreement between the simulation model and the measurement values is most important at this primary operating point.

Weighting according to the age of measurement values is particularly advantageous if drifts over time occur. For example, if the measurement values are related to some entity that is subject to degradation, old measurement values should have a lesser impact on the contribution and/or adjustment than newer measurement values.

Another example in which weighted measurement values are advantageous is if information on measurement errors is available. Typically, the accuracy of a hydrogen mass flow measurement depends on the mass flow so that for larger mass flows also the measurement errors are larger. The weight of a measurement in this situation is given by the inverse of the measurement error.

In a further particularly advantageous embodiment, the evolution of a contribution and/or adjustment to the simulation model over time is tracked. From this evolution, a degradation behaviour, and/or an abnormal operating state, of the electrolyzer plant is evaluated. In this manner, an appropriate reaction may be initiated at an earlier time.

The method may be wholly or partially computer-implemented. The invention therefore also relates to one or more computer programs with machine-readable instructions that, when executed on one or more computers and/or compute instances, cause the one or more computers to perform the method described above. In this context, a virtualization platform, a hardware controller, network infrastructure devices (such as switches, bridges, routers or wireless access points), as well as end devices in the network (such as sensors, actuators or other industrial field devices) that are able to execute machine readable instructions are to be regarded as computers as well.

The invention therefore also relates to a non-transitory storage medium, and/or to a download product, with the one or more computer programs. A download product is a product that may be sold in an online shop for immediate fulfillment by download. The invention also provides one or more computers and/or compute instances with the one or more computer programs, and/or with the one or more non-transitory machine-readable storage media and/or download products.

### DESCRIPTION OF THE FIGURES

In the following, the invention is illustrated using Figures without any intention to limit the scope of the invention. The Figures show:
Figure 1: Exemplary embodiment of the method 100 for establishing and/or improving a simulation model 2 of an electrolyzer plant 1;
Figure 2: Two possible exemplary adjustments to an original simulation model 2 based on one and the same set of measurement values;
Figure 3: Exemplary adjustment to an original simulation model 2 based on a weighted consideration of measurement values.

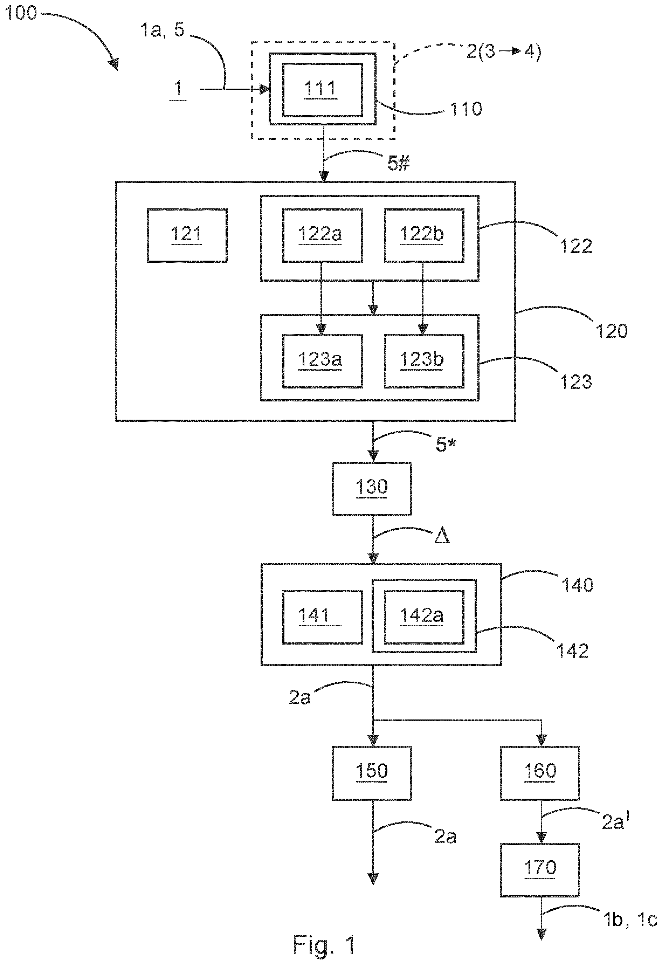

Figure 1 is a schematic flow chart of an embodiment of the method 100 establishing and/or improving a simulation model 2 of an electrolyzer plant 1. The simulation model 2 is configured to map one or more variables 3 that characterize an operating state 1a of the electrolyzer plant 1 to one or more performance indicators 4 of the electrolyzer plant 1.

In step 110, starting from a given operating state 1a of the electrolyzer plant 1, the simulation model 2 is used to predict one or more prediction values 5# of at least one sought quantity 5.

According to block 111, this sought quantity 5 may comprise the performance indicator 4, and/or at least one physical quantity that the simulation model 2 uses for the computation of the performance indicator 4 from the variables 3.

In step 120, one or more measurement values 5* of the same at least one sought quantity 5 is obtained. The one or more measurement values 5* relate to the same given operating state 1a of the electrolyzer plant 1 as the prediction values 5#.

According to block 121, the given operating state 1a and the measurement values 5* may be acquired during normal operation of the electrolyzer plant 1. That is, the one or more variables 3 that characterize the operating state 1a, as well as measurement values 5* of the sought quantity 5 that may ultimately give rise to the performance indicator 4, may be obtained from data that is already available in the course of normal operation. Normal operation is not altered.

According to block 122, the electrolyzer plant 1 may be steered into a given operating state 1a that is not part of the normal operation of the electrolyzer plant 1. According to block 123, the response of one or more measurement values 5* to this steering may then be determined.

In one exemplary embodiment, according to block 122a, voltage and/or current fluctuations may be introduced into at least one electrolyzer cell of the electrolyzer plant 1. According to block 123a, the response of the current through the at least one electrolyzer cell, and/or of the voltage over the at least one electrolyzer cell, to these voltage and/or current fluctuations may then be measured.

In another exemplary embodiment, according to block 122b, only one of multiple variables 3 that characterize the operating state 1a may be varied. The response of the at least one quantity 5 to this variation may then be measured.

In step 130, at least one deviation Δ of the one or more prediction values 5# from the respective measurement values 5* is determined.

In step 140, from the deviation Δ and the simulation model 2, a contribution and/or an adjustment 2a to the simulation model 2 is determined.

According to block 141, the contribution and/or adjustment 2a may comprise one or more of:
- a change to parameters in a parametrized function of the variables 3;
- a change to the set of variables 3;
- a change of a function of the variables 3 to a function of a different degree and/or type, and/or to a different function;
- a change to a level of complexity of the simulation model 2; and
- a change to a set of physical effects that are considered or neglected by the simulation model 2.

According to block 142, the determining 140 of the contribution and/or adjustment 2a may comprise fitting at least one function of the variables 3, and/or of a computation result derived from the variables 3, to a plurality of measurement values 5*.

According to block 142a, during the fitting 142, the measurement values 5* may be weighted according to one or more of:
- the frequency with which they occur;
- their age; and
- an estimate of their accuracy.

In step 150, the contribution and/or adjustment 2a is applied to the simulation model 2.

In step 160, the evolution 2a' of a contribution and/or adjustment 2a to the simulation model 2 may be tracked over time. In step 170, from this evolution 2a', a degradation behaviour 1b, and/or an abnormal operating state 1c, of the electrolyzer plant 1 may then be evaluated. This may be used in any suitable manner for the benefit of the electrolyzer plant 1. For example, the electrolyzer plant 1 may be actuated in a manner that is likely to move the electrolyzer plant 1 from the abnormal state 1c back to a normal operating state 1a, or to at least slow (and possibly reverse) the degradation behaviour 1b. Alternatively or in combination to this, the degradation behaviour 1b, the abnormal operating state 1c, and/or even the evolution 2a' of the contribution and/or adjustment 2a itself, may be rendered graphically for an operator of the electrolyzer plant 1, e.g., on a graphical dashboard. This provides the operator with a quick overview on the health status of plant components.

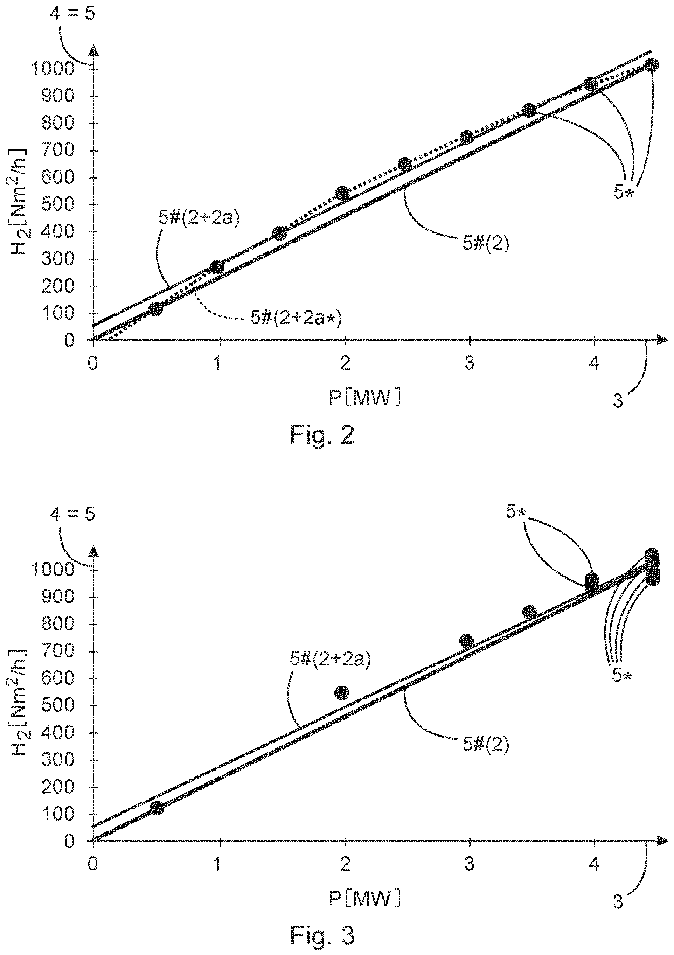

In Figure 2, measurement values 5* of a hydrogen (H₂) output rate of an exemplary electrolyzer plant 1 as performance indicator 4 and sought quantity 5 are plotted over the power input to the electrolyzer plant 1 as the variable 3. In the same diagram, prediction values 5# of the sought quantity 5 obtained from different simulation models are plotted.

In the example shown in Figure 2, the original simulation model 2 is a simple linear model according to which the hydrogen output is strictly proportional to the power input. This original model appears to be in agreement with the measurement values 5* for very low and very high power inputs, but not for medium power inputs.

By adding an offset as adjustment 2a to the strictly proportional original model 2, a better agreement with the measurement values 5* may be obtained on the average. But this comes at the price that the agreement gets worse for very low and for very high power inputs. If the electrolyzer plant 1 is operated at higher power inputs for most of the time, then it is better to stick to the original simulation model 2.

Another exemplary adjustment 2a* goes beyond merely changing the coefficients of a linear model. Rather, the dependency of the hydrogen output on the power input is changed from a linear one to a quadratic one. This results in a much better agreement with the measurement values 5*. In particular, it is physically more plausible that hydrogen production sets in only if the power input is above a particular threshold. Thus, in this example, it is better to allow a change from a linear function to a quadratic function.

Figure 3 also shows measurement values 5* of the hydrogen output rate as performance indicator 4 and sought quantity 5 plotted over the power input as variable 3. Compared with Figure 2, the scenario is different in that the measurement values 5* are concentrated at higher power inputs. Consequently, when determining the adjustment 2a to the model 2, measurement values 5* for higher power inputs are given higher weights.

In the example shown in Figure 3, sticking to a linear dependency of the hydrogen output on the power input results in a better agreement with the measurement values 5* for high power inputs than switching to a quadratic dependency. On the other hand, the physical implausibility that the hydrogen output is nonzero even at zero power input reappears. But for the application at hand, this may be less important than a higher accuracy in the regime of high power inputs.

### List of reference signs:

- 1: electrolyzer plant
- 1a: operating state of electrolyzer plant 1
- 1b: degradation behaviour of electrolyzer plant 1
- 1c: abnormal operating state of electrolyzer plant 1
- 2: simulation model of electrolyzer plant 1
- 2a, 2a*: contribution/adjustment to simulation model 2
- 2a': evolution of contribution 2a in time
- 3: variables, characterize operating state 1a
- 4: performance indicator for electrolyzer plant 1
- 5: sought quantity
- 5*: measurement value of sought quantity 5
- 5#: prediction value of sought quantity 5
- 100: method for establishing and/or improving simulation model 2
- 110: predicting prediction values 5# of sought quantity 5
- 111: particular choices for sought quantity 5
- 120: obtaining measurement values 5* of sought quantity 5
- 121: acquiring state 1a, measurement values 5* during normal operation
- 122: steering plant 1 to special operating state 1a
- 122a: introducing voltage and/or current fluctuations
- 122b: changing only one of multiple variables 3
- 123: determining response of measurement values 5* to steering
- 123a: determining response to voltage and/or current fluctuations
- 123b: determining response to single-variable variations
- 130: determining deviation Δ
- 140: determining contribution and/or adjustment 2a
- 141: particular choices for contribution and/or adjustment 2a
- 142: fitting function of variables 3 to measurement values 5*
- 142a: weighting measurement values 5* during fitting
- 150: applying contribution and/or adjustment 2a to simulation model 2
- 160: tracking evolution 2a' over time
- 170: evaluation degradation behaviour 1b, abnormal state 1c from evolution 2a'
- Δ: deviation of prediction values 5# from measurement values 5*

## Claims

1. A method (100) for establishing and/or improving a simulation model (2) of an electrolyzer plant (1) comprising at least one electrolyzer, wherein the simulation model (2) is configured to map one or more variables (3) that characterize an operating state (1a) of the electrolyzer plant (1) to one or more performance indicators (4) of the electrolyzer plant (1), the method comprising the steps of:
• predicting (110), using the simulation model (2), for a given operating state (1a) of the electrolyzer plant (1), one or more prediction values (5#) of at least one quantity (5);
• obtaining (120) one or more measurement values (5*) of the same at least one quantity (5) that relate to the same given operating state (1a) of the electrolyzer plant (1);
• determining (130) at least one deviation (Δ) of the one or more prediction values (5#) from the respective measurement values (5*);
• determining (140), from the deviation (Δ) and the simulation model (2), a contribution and/or an adjustment (2a) to the simulation model (2); and
• applying (150) the contribution, and/or the adjustment (2a), to the simulation model (2).

2. The method (100) of claim 1, wherein the given operating state (1a) and the measurement values (5*) are acquired (121) during normal operation of the electrolyzer plant (1).

3. The method (100) of any one of claims 1 or 2,
wherein the electrolyzer plant (1) is steered (122) into a given operating state (1a) that is not part of the normal operation of the electrolyzer plant (1), and the response of one or more measurement values (5*) to this steering is determined (123).

4. The method (100) of claim 3, wherein voltage and/or current fluctuations are introduced (122a) into at least one electrolyzer cell of the electrolyzer plant (1), and the response of the current through the at least one electrolyzer cell, and/or of the voltage over the at least one electrolyzer cell, to these voltage and/or current fluctuations is measured (123a).

5. The method of any one of claims 3 to 4, wherein only one of multiple variables (3) that characterize the operating state (1a) is varied (122b), and the response of the at least one quantity (5) to this variation is measured (123b).

6. The method of claim 5, wherein the temperature of at least one electrolyzer cell of the electrolyzer plant (1) is chosen as the variable to be varied.

7. The method (100) of any one of claims 1 to 6,
wherein the performance indicator (4) comprises: a production quantity of hydrogen, and/or a degradation state of at least one electrolyzer cell of the electrolyzer plant (1), and/or an energy efficiency of the electrolyzer plant (1), and/or an amount of waste heat generated by the electrolyzer plant (1).

8. The method of any one of claims 1 to 7, wherein the quantity (5) comprises (111) the performance indicator (4), and/or at least one physical quantity that the simulation model (2) uses for the computation of the performance indicator (4) from the variables (3).

9. The method (100) of any one of claims 1 to 8,
wherein the contribution, and/or the adjustment (2a), to the simulation model (2) comprises (141) one or more of:
• a change to parameters in a parametrized function of the variables (3);
• a change to the set of variables (3);
• a change of a function of the variables (3) to a function of a different degree and/or type, and/or to a different function;
• a change to a level of complexity of the simulation model (2); and
• a change to a set of physical effects that are considered or neglected by the simulation model (2).

10. The method (100) of any one of claims 1 to 9,
wherein the determining (140) of the contribution, and/or the adjustment (2a), comprises (142) fitting at least one function of the variables (3), and/or of a computation result derived from the variables (3), to a plurality of measurement values (5*).

11. The method (100) of claim 10, wherein, during the fitting (142), the measurement values (5*) are weighted (142a) according to one or more of:
• the frequency with which they occur;
• their age; and
• an estimate of their accuracy.

12. The method (100) of any one of claims 1 to 11, further comprising:
• tracking (160) the evolution (2a') of a contribution and/or adjustment (2a) to the simulation model (2) over time; and
• evaluating (170), from said evolution (2a'), a degradation behaviour (1b), and/or an abnormal operating state (1c), of the electrolyzer plant (1).

13. A computer program, comprising machine-readable instructions that, when executed on one or more computers, cause the one or more computers to perform the method of any one of claims 1 to 12.

14. A non-transitory storage medium, and/or a download product, with the computer program of claim 13.

15. One or more computers with the computer program of claim 13, and/or with the non-transitory storage medium and/or download product of claim 14.
